# EUROPEAN PATENT APPLICATION

(11) **EP 3 208 694 A1**
(43) Date of publication of application: **23.08.2017**
(21) Application number: 15851388.7
(22) Date of filing: 03.07.2015
(51) Int. Cl.: G06F 3/038, G06F 3/048, G06F 15/00

(54) **SCREEN GENERATION DEVICE, SCREEN GENERATION SYSTEM, AND SCREEN GENERATION METHOD**

(30) Priority: 14.10.2014 JP 2014209578
(71) Applicant: Panasonic Intellectual Property Management Co., Ltd., Osaka-shi, Osaka 540-6207 (JP)
(72) Inventor: ITOH, Tomoaki, Osaka-shi Osaka, 540-6207 (JP); KAGEYAMA, Mitsuhiro, Osaka-shi, Osaka, 540-6207 (JP); FUKUDA, Chikara, Osaka-shi Osaka, 540-6207 (JP)
(74) Representative: Grünecker Patent- und Rechtsanwälte PartG mbB
(86) International application number: PCT/JP2015/003350
(87) International publication number: WO 2016/059737

(57) **Abstract**

A screen generating device which receives a first operation signal of a touch operation from each of a plurality of terminals, and transmits content matching each of the plurality of terminals, and includes: an operation signal receiver which receives the first operation signal; an operation type determining unit which determines a type of the first operation signal; an operation signal converter which converts the first operation signal into a second operation signal of a mouse operation; and a plurality of browsers which generates a screen of the content matching each of the plurality of terminals by using the first operation signal or the second operation signal based on a result of the determination made by the operation type determining unit. Consequently, it is possible to cause a server to receive an operation of each of a plurality of client terminals and cause each client terminal to operate one desktop of the server.

## Description

### TECHNICAL FIELD

The present disclosure relates to a screen generating device, a screen generating system and a screen generating method which receive touch operation signals from a plurality of terminals, and generate and transmit content matching each of the plurality of terminals.

### BACKGROUND ART

A virtualization technology is rapidly spreading from viewpoints of flexibility, availability and a cost advantage of an operation. The virtualization technology is a technology for logically integrating and dividing and enabling use of resources (a CPU, a memory and a disk) in hardware such as a server irrespectively of a physical configuration. One of these virtualization technologies disclosed in PTL 1 is a desktop virtualization technology for causing a server to execute drawing processing on a desktop which has been conventionally performed by each client terminal, and transmitting a processing result as video content to each client terminal.

### Citation List

### Patent Literature

PTL 1: International Patent Publication No. 2012/133300

### SUMMARY OF THE INVENTION

An object of the present disclosure is to cause a screen generating server to receive an operation of each of a plurality of client terminals and cause each client terminal to operate one desktop of the screen generating server to virtualize a desktop formed by the screen generating server and each client terminal.

A screen generating device according to the present disclosure is a screen generating device which receives a first operation signal of a touch operation from each of a plurality of terminals, and transmits content matching each of the plurality of terminals, and the screen generating device including: an operation signal receiver which receives the first operation signal; an operation type determining unit which determines a type of the first operation signal; an operation signal converter which converts the first operation signal into a second operation signal of a mouse operation; and a plurality of browsers which generates a screen of the content matching each of the plurality of terminals by using the first operation signal or the second operation signal based on a result of the determination made by the operation type determining unit.

A screen generating system according to the present disclosure is a screen generating system including: a plurality of terminals; and a screen generating device which receives a first operation signal of a touch operation from each of the plurality of terminals, and transmits content matching each of the plurality of terminals, wherein the plurality of terminals includes: an operation type determining unit which determines a type of the first operation signal input from a touch panel; an operation signal transmitter which transmits to the screen generating device the first operation signal and a result of the determination made by the operation type determining unit, and the screen generating device includes: an operation signal receiver which receives the first operation signal; an operation signal converter which converts the first operation signal into a second operation signal of a mouse operation; and a plurality of browsers which generates a screen of the content matching each of the plurality of terminals by using the first operation signal or the second operation signal based on a result of the determination made by the operation type determining unit.

A screen generating method according to the present disclosure is a screen generating method for receiving a first operation signal of a touch operation from each of a plurality of terminals, and transmitting content matching each of the plurality of terminals, and the screen generating method including: receiving the first operation signal; determining a type of the first operation signal; and generating a screen of the content matching each of the plurality of terminals by using the first operation signal or a second operation signal of a mouse operation converted from the first operation signal, based on a result of the determination.

According to the present disclosure, it is possible to cause a screen generating server to receive an operation of each of a plurality of client terminals and cause each client terminal to operate one desktop of the screen generating server to virtualize a desktop formed by the screen generating server and each client terminal.

### BRIEF DESCRIPTION OF DRAWINGS

FIG. 1 is a schematic view of a screen generating system of a screen generating server and client terminals.
FIG. 2 is a block diagram illustrating a configuration of the screen generating system of the screen generating server and the client terminals according to a first exemplary embodiment.
FIG. 3 is a view illustrating a list of touch operation signals used by the screen generating system.
FIG. 4 is a view illustrating a list of mouse operation signals used by the screen generating system.
FIG. 5 is a view illustrating a conversion table of touch operation signals and mouse operation signals.
FIG. 6A is a view illustrating a touch operation signal transfer method.
FIG. 6B is a view illustrating a touch operation signal transfer method.
FIG. 7 is a view illustrating advantages and disadvantages of each touch operation signal transfer method.
FIG. 8 is a view illustrating classification of touch operation types.
FIG. 9 is a flowchart illustrating a processing flow of an operation type determining unit.
FIG. 10 is a flowchart illustrating a processing flow of an operation signal converter.
FIG. 11 is a block diagram illustrating a configuration of the screen generating system of the screen generating server and the client terminals according to a second exemplary embodiment.

### DESCRIPTION OF EMBODIMENTS

Exemplary embodiments will be described in detail optionally with reference to the drawings. In this regard, the exemplary embodiments will not be described more than necessary. For example, matters which have already been well known will not be described in detail, and substantially same components will not be described again in some cases to prevent the following explanation from becoming redundant more than necessary and help one of ordinary skill in the art understand the exemplary embodiments.

In addition, the inventors of the present invention provide the accompanying drawings and the following description to help one of ordinary skill in the art sufficiently understand the present disclosure yet do not intend to limit a subject matter recited in the claims.

### (FIRST EXEMPLARY EMBODIMENT)

### [1. Outline]

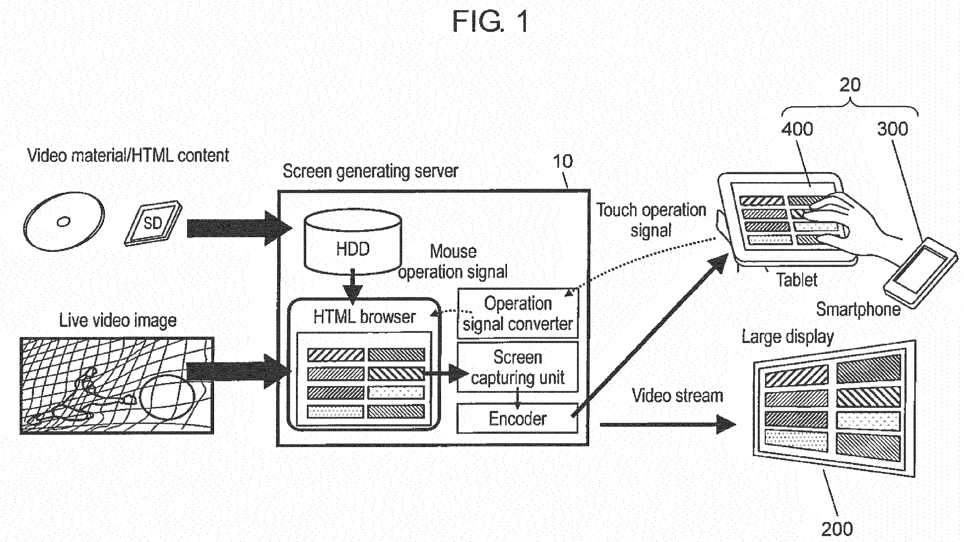

FIG. 1 is a schematic view of a screen generating system of a screen generating server and client terminals which virtualizes a desktop. The screen generating system illustrated in FIG. 1 is configured to display HTML content obtained by combining multiple video images, on a desktop screen of screen generating server 10 by using browsers, integrate the HTML content into one video stream and distribute the HTML content to various client terminals 20 such as large display 200, smartphone 300 and tablet 400. Thus, by integrating multiple video images into one video stream to distribute, it is possible to display HTML content obtained by combining multiple video images which each client terminal 20 cannot play back and display.

Further, the screen generating system can operate a desktop of screen generating server 10 from each client terminal 20. In this case, the screen generating system transmits to screen generating server 10 a touch operation signal received by each client terminal 20 based on a user's touch operation, and screen generating server 10 reflects this touch operation signal on the desktop of screen generating server 10. When each client terminal 20 is a device such as smartphone 300 or tablet 400 including a touch panel, each client terminal 20 transmits to screen generating server 10 a touch operation signal related to a touch operation. In this case, by converting the touch operation signal into a mouse operation signal related to a mouse operation on the desktop, screen generating server 10 can reflect on the desktop the touch operation signal received from each client terminal 20.

Screen generating server 10 can secure on a desktop screen a wider area than screens of smartphone 300 and tablet 400. Consequently, screen generating server 10 can simultaneously display browsers for a plurality of client terminals. For example, it is assumed that a resolution of the desktop screen of screen generating server 10 is 3840 × 2160 (4K resolution), and a resolution of a screen of each client terminal 20 is 1920 × 1080 (Full HD resolution). In this case, screen generating server 10 places four browsers of drawing areas of 1920 × 1080 on the desktop without overlapping the browsers with each other, and clips the browser drawing areas after capturing the desktop screen. Further, screen generating server 10 transmits a result obtained by encoding an image of each clipped browser drawing area, to four client terminals associated with the four browsers, respectively. Consequently, the four client terminals can share one desktop screen of screen generating server 10.

Screen generating server 10 executes various applications by causing a predetermined operating system to operate. For example, screen generating server 10 executes a mouse operation on each browser by causing an operating system to operate. When a plurality of client terminals 20 is simultaneously connected to screen generating server 10 which operates based on one operating system, one of client terminals has conventionally occupied a mouse operation. Hence, screen generating server 10 cannot convert into a mouse operation a touch operation from each client terminal 20 other than client terminal 20 which occupies the mouse operation.

Hence, screen generating server 10 has a problem that, even though screen generating server 10 is capable of generating screen images of a plurality of client terminals 20 by using one desktop, screen generating server 10 can accommodate only one client terminal 20 for one desktop due to a restriction of an operation system. The inventors recognized this problem in a process of developing desktop virtualization, and invented the screen generating device, the screen generating system and the screen generating method which solve this problem. Hereinafter, a first exemplary embodiment which is an example of an embodied technical concept of the screen generating device, screen generation and the screen generating method system according to the present disclosure will be described in detail.

### [2. System Configuration]

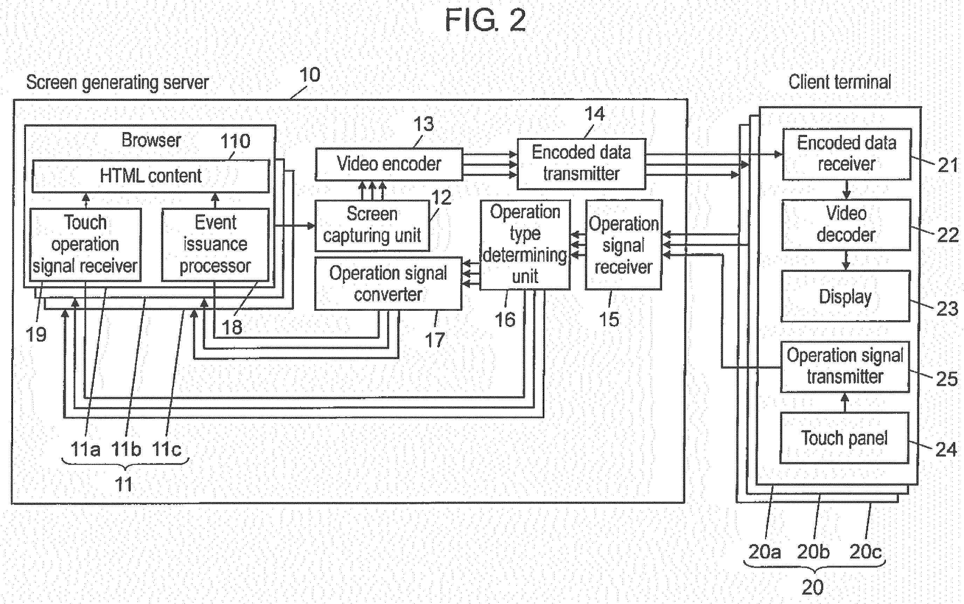

FIG. 2 is a block diagram illustrating configurations of screen generating server 10 and client terminals 20 according to the first exemplary embodiment. Screen generating server 10 can simultaneously connect with a plurality of client terminals 20. Following description assumes that a plurality of client terminals 20 are three client terminals 20a, 20b and 20c.

First, the configuration of each client terminal 20 will be described. Each client terminal 20 plays back and displays a drawing video image of HTML content 110 transmitted from screen generating server 10. Each client terminal 20 includes encoded data receiver 21, video decoder 22, display 23, touch panel 24 and operation signal transmitter 25. The configuration of each client terminal 20 will be described below.

Encoded data receiver 21 is a communication module which performs network communication with screen generating server 10. Encoded data receiver 21 receives video encoded data transmitted from screen generating server 10, and transmits video data to video decoder 22.

Video decoder 22 is a decoder module which decodes the video encoded data received from encoded data receiver 21, and decodes video data. Further, video decoder 22 transmits the generated video data to display 23.

Display 23 is a display device such as a liquid crystal display which displays video data received from video decoder 22, for a user of each client terminal 20.

Touch panel 24 receives an input of a touch operation from the user of each client terminal 20, and transmits a touch operation signal to operation signal transmitter 25. The touch operation signal will be described later in detail.

Operation signal transmitter 25 is a communication module which transmits the touch operation signal received from touch panel 24, to screen generating server 10.

Next, the configuration of screen generating server 10 will be described. Screen generating server 10 distributes each video image to a plurality of client terminals 20a, 20b and 20c in response to video distribution requests from a plurality of client terminals 20a, 20b and 20c. Further, screen generating server 10 receives a touch operation signal from each of client terminals 20a, 20b and 20c to reflect in each of browsers 11a, 11b and 11c. Browsers 11 (11a, 11b and 11c) are associated with client terminals 20 (20a, 20b and 20c), respectively.

Screen generating server 10 includes each block of browsers 11 (11a, 11b and 11c), screen capturing unit 12, video encoder 13, encoded data transmitter 14, operation signal receiver 15, operation type determining unit 16 and operation signal converter 17. The configuration of these components will be described below.

Operation signal receiver 15 is a communication module which receives a touch operation signal which is a first operation signal from each client terminal 20. Operation signal receiver 15 transmits the received touch operation signal to operation type determining unit 16.

Operation type determining unit 16 determines a touch operation type (tap, flick and swipe) based on the touch operation signal received from operation signal receiver 15, and transmits the touch operation signal to operation signal converter 17 or each browser 11 according to an operation type. A reason that a touch operation signal transmission path is selected based on an operation type will be described later.

Operation signal converter 17 converts the touch operation signal received from operation type determining unit 16, into a mouse operation signal, and transmits the converted mouse operation signal to each browser 11. Details of the mouse operation signal and details of conversion processing will be described later.

Browsers 11 (11a, 11b and 11c) draw screens of content to be transmitted to corresponding client terminals 20 (20a, 20b and 20c), respectively. Further, each browser 11 displays and plays back HTML content 110 existing on a network or accumulated in screen generating server 10. Furthermore, each browser 11 includes event issuance processor 18 which receives a mouse operation signal from operation signal converter 17 and performs event issuance processing on HTML content 110, and touch operation signal receiver 19 which directly receives a touch operation signal from operation type determining unit 16 via communication means such as WebSocket. Event issuance processing is "coordinate ⇒ element conversion" processing of, when HTML content displayed on each browser is operated (by, for example, clicking a link) by using a mouse, determining to which element of the HTML content to transmit operation event information based on information of a coordinate (X, Y) operated by the mouse. Further, a reason that each browser 11 includes two types of operation signal reception paths will be described later.

Screen capturing unit 12 captures a desktop, and clips a display area of each of the browsers 11a, 11b and 11c from the captured screen. Further, screen capturing unit 12 transmits each clipped image to video encoder 13.

Video encoder 13 is an encoder module which encodes the clipped image received from screen capturing unit 12 as a video image to transmit to encoded data transmitter 14. Video encoder 13 generates items of video encoded data for client terminals 20a, 20b and 20c in parallel.

Encoded data transmitter 14 is a network communication module which transmits the encoded data to each of client terminals 20a, 20b and 20c.

### [3. Touch Operation Signal]

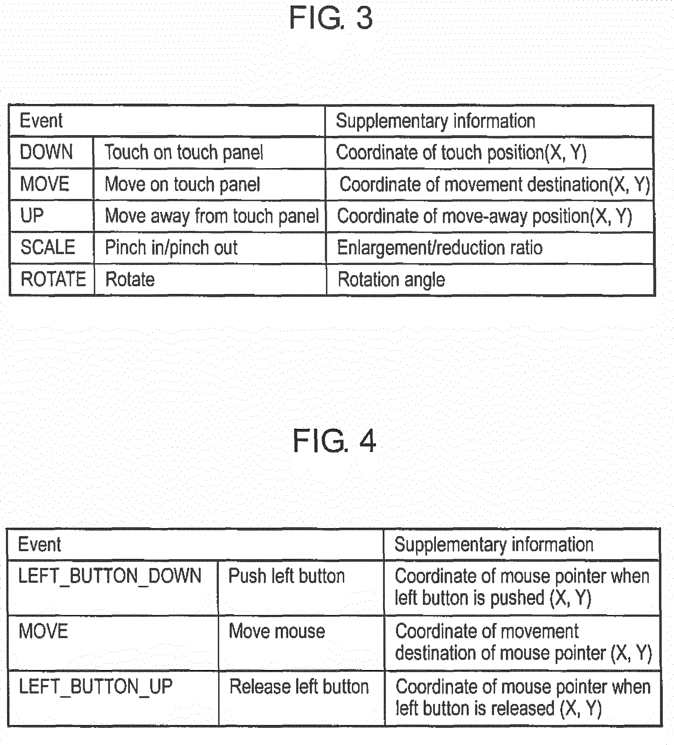

A touch operation signal expresses contents of a user's touch operation of each client terminal 20 as a combination of an event and supplementary information. FIG. 3 illustrates a list of touch operation signals used by the screen generating system according to the present disclosure. An event "DOWN" occurs when a touching object such as a finger touches touch panel 24. When the event "DOWN" occurs, coordinate information of a finger touch position is provided as supplementary information. An event "MOVE" occurs when the finger moves on touch panel 24 after the event "DOWN" occurs. When the event "MOVE" occurs, coordinate information of a finger movement destination is provided as supplementary information. An event "UP" occurs when the finger moves away from touch panel 24. When the event "UP" occurs, coordinate information indicating a finger move-away position is provided as supplementary information. An event "SCALE" occurs when the finger pinches in/pinches out touch panel 24 after the event "DOWN" occurs. When the event "SCALE" occurs, information indicating an enlargement/reduction ratio is provided as supplementary information. An event "ROTATE" occurs when the finger rotates on touch panel 24 after the event "DOWN" occurs. When the event "ROTATE" occurs, information indicating a rotation angle is provided as supplementary information.

### [4. Mouse Operation Signal]

A mouse operation signal expresses contents of a mouse operation as a combination of an event and supplementary information. FIG. 4 illustrates a list of mouse operation signals used by the screen generating system according to the present disclosure. An event "LEFT_BUTTON_DOWN" indicates that a left button of a mouse is pushed. When the event "LEFT_BUTTON_DOWN" occurs, coordinate information of a mouse pointer obtained when the left button is pushed is provided as supplementary information. An event "MOVE" occurs when the mouse moves. When the event "MOVE" occurs, coordinate information of a movement destination of the mouse pointer is provided as supplementary information. An event "LEFT_BUTTON_UP" occurs when the mouse button is released. When the event "LEFT_BUTTON_UP" occurs, coordinate information indicating a position of the mouse pointer at a point of time at which the mouse button is released is provided as supplementary information.

### [5. Correspondence Table of Touch Operation Signals and Mouse Operation Signals]

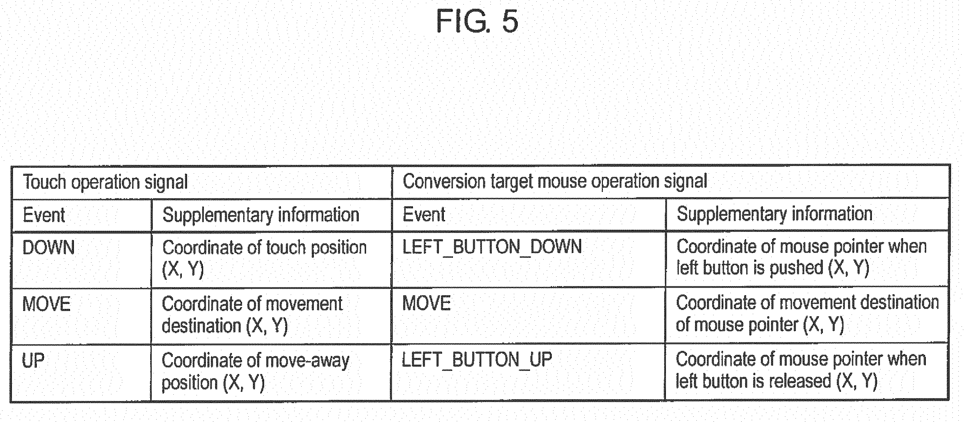

FIG. 5 illustrates a correspondence table of touch operation signals and mouse operation signals to which operation signal converter 17 refers to. First, operation signal converter 17 refers to an event field of each touch operation signal in the table in FIG. 5, and selects a row of an event of the touch operation signal which is currently processed. Next, operation signal converter 17 refers to an event of a mouse operation of the selected row, and determines the event of the mouse operation signal to transmit. Consequently, operation signal converter 17 can convert the touch operation signal into the mouse operation signal.

### [6. Touch Operation Signal Transmission Path]

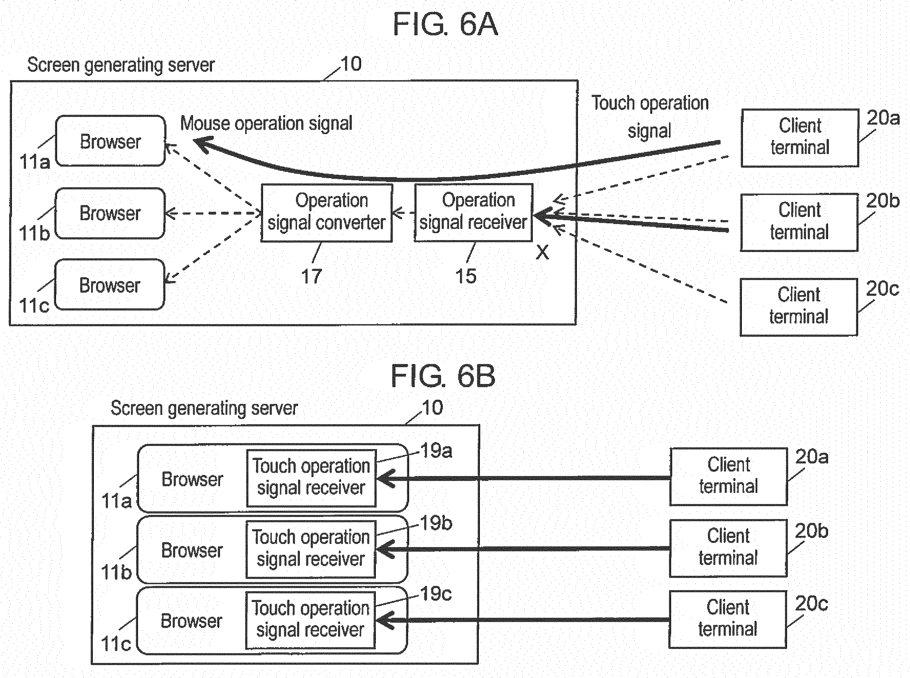

As described above, when a plurality of client terminals 20 is simultaneously connected to screen generating server 10 which operates based on one operating system, one client terminal 20 has conventionally occupied a mouse operation. Hence, screen generating server 10 cannot convert into a mouse operation a touch operation from each client terminal 20 other than client terminal 20 which occupies the mouse operation. Hence, one of two methods illustrated in FIGS. 6A and 6B is used to enable one desktop to receive touch operations of a plurality of client terminals 20. FIGS. 6A and 6B are views illustrating touch operation signal transfer methods.

FIG. 6A illustrates method 1 for allowing client terminal 20a to occupy a mouse operation per processing unit whose one processing unit is a touch operation of placing the finger in contact with the touch panel and moving the finger away from the touch panel, and excluding inputs of touch operations from other client terminals 20b and 20c. The touch operation signal from client terminal 20a which occupies the mouse operation is converted into a mouse operation signal, and then is transmitted to corresponding browser 11a via a first path.

Meanwhile, FIG. 6B illustrates method 2 for directly transmitting touch operation signals of client terminals 20a, 20b and 20c to corresponding browsers 11a, 11b and 11c via a second path by using WebSocket without performing a mouse operation.

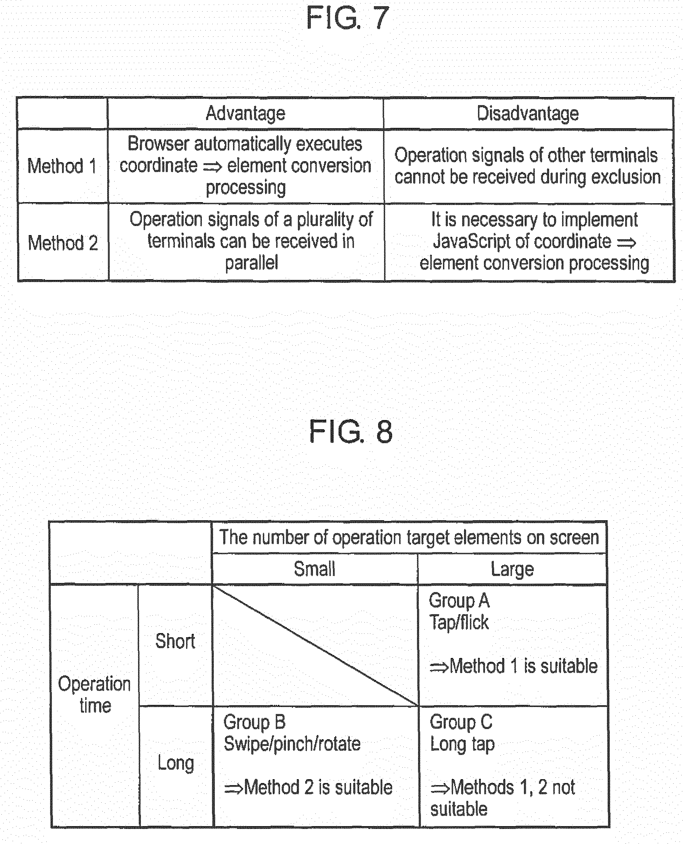

FIG. 7 illustrates a result obtained by comparing advantages and disadvantages of method 1 and method 2. "coordinate ⇒ element conversion processing" illustrated in FIG. 7 is processing of determining an event issuance target HTML element based on a coordinate transmitted as supplementary information of a touch operation. According to method 1, the touch operation is processed in the same way as that a mouse operation is performed on each browser. That is, this processing is performed by each browser. Meanwhile, according to method 2, JavaScript (registered trademark) operating on each browser directly receives an event of a touch operation. Therefore, the "coordinate ⇒ element conversion processing" needs to be implemented by JavaScript (registered trademark). According to this processing, every time an operation event occurs, processing of determining whether or not each operation target element is an event issuance target is performed. Hence, as a number of operation target elements increases, a processing load increases. Hence, it is difficult to apply method 2 when a number of processing target elements is large.

Meanwhile, according to method 1, while a given touch operation of client terminal 20a is processed, touch operation signals from other client terminals 20b and 20c are not received. Therefore, method 1 is not applicable to an operation whose time of processing such as swipe or pinch in/pinch out may be several seconds.

Thus, there is a case where it is difficult to apply both of method 1 and method 2, and therefore it is difficult to handle all touch operations by using one of method 1 and method 2. Hence, the screen generating device, the screen generating system and the screen generating method according to the present disclosure adopt a hybrid method for classifying a touch operation according to characteristics, and applying one suitable method of method 1 and method 2 according to a type of the touch operation. That is, operation type determining unit 16 properly uses two types of a path for transmitting a touch operation signal to each browser by performing a mouse operation and a path for directly transmitting a touch operation signal to each browser 11 according to the type of the touch operation signal received from each client terminal 20.

FIG. 8 illustrates a type classification result of main touch operations. Classification axes of the classification result illustrated in FIG. 8 are that 1) an operation time is long/short and 2) the number of operation target elements of HTML content is large/small. According to this classification, touch operations are classified into three groups of groups A, B and C.

Touch operations belonging to group A have characteristics that an operation time is short and there are a large number of operation target elements on the screen. A tap operation and a flick operation belong to group A. For example, duration of time of a tap operation in which the finger touches and moves away from touch panel 24 is 100 milliseconds or less and has a very short operation time. Further, there is a case where an operation target element of the tap operation is a link or an item in a list, and includes multiple processing target elements in the screen. Hence, it is difficult to implement JavaScript (registered trademark) of performing "coordinate ⇒ element conversion processing" for the touch operations belonging to group A. Accordingly, for the touch operations belonging to group A, method 2 is not suitable, and method 1 is suitable.

Touch operations belonging to group B have characteristics that an operation time is long and there are a small number of operation target elements on the screen. A swipe operation, a pinch operation and a rotate operation belong to group B. For example, there is a case where a swipe operation takes several seconds until the finger touches the screen and then moves away from the screen, and an operation time is long. Hence, when exclusion control is performed according to method 1, it is highly likely that there are client terminals 20 whose touch operation signals are not received. Further, the touch operations belonging to group B are operations of scrolling a list or an entire screen for elements having wide areas to some degree. There are few cases where multiple operation targets are placed in the screen. Hence, it is relatively easy to implement JavaScript (registered trademark) of performing "coordinate ⇒ element conversion processing" for the touch operations belonging to group B. Accordingly, for the touch operations belonging to group B, method 1 is not suitable, and method 2 is suitable.

Touch operations belonging to group C have characteristics that an operation time is long and there are a large number of operation target elements. Long tap belongs to group C. According to long tap, there is a case where an operation time is long and operation target elements include multiple processing target elements in the screen. Hence, for the operation belonging to this group C, both of method 1 and method 2 are not suitable. The system according to the first exemplary embodiment cannot use the touch operation belonging to this group C, yet the operation belonging to this group C is only long tap. When this operation cannot be used, there is little influence on content creation or user interface design. In addition, the present disclosure does not exclude the touch operation belonging to group C. That is, for the touch operation belonging to group C, method 1 or method 2 may be adopted according to a design concept.

As described above, operation type determining unit 16 determines an operation type of a touch operation signal. Further, operation type determining unit 16 uses method 1 (for converting and transmitting a mouse operation signal) to transmit a touch operation signal when determining that a touch operation is the touch operation of group A, and uses method 2 (for directly transmitting a touch operation signal) to transmit a touch operation signal when determining that the touch operation is the touch operation of group B. Consequently, it is possible to perform practicable operation processing while making up for the disadvantage of each method.

### [7. Processing Flow of Operation Type Determining Unit 16]

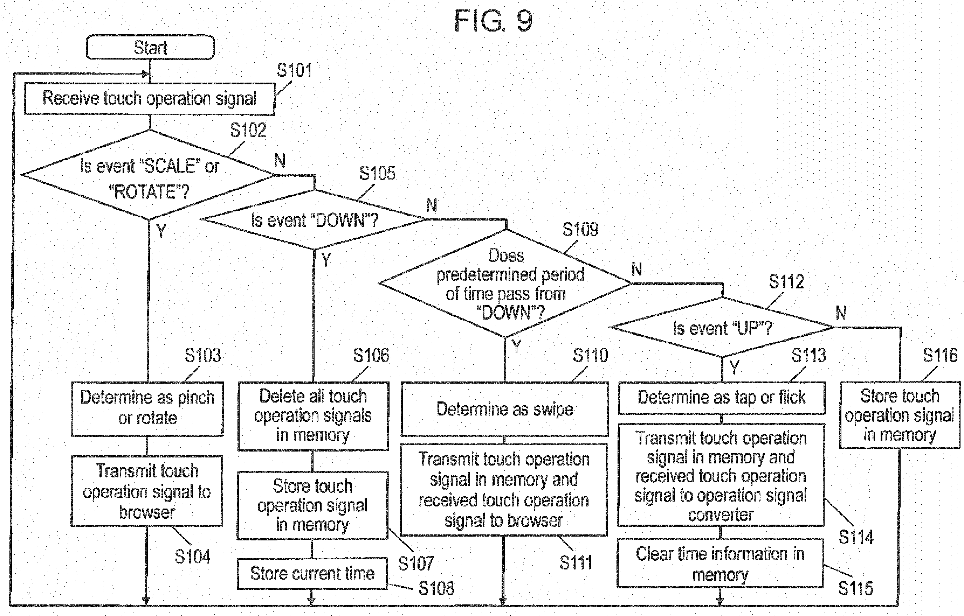

FIG. 9 is a flowchart illustrating an operation of operation type determining unit 16. First, operation type determining unit 16 receives a touch operation signal from each client terminal 20 (step S101). Next, operation type determining unit 16 determines whether an event of the received touch operation signal is "SCALE" or "ROTATE" (step S102). When the touch operation signal is "SCALE" or "ROTATE" (Yes in step S102), operation type determining unit 16 determines that the touch operation signal is pinch or rotate (step S103). Pinch and rotate are touch operations belonging to group B, and therefore operation type determining unit 16 adopts method 2 and transmits the touch operation signal to each browser 11 (step S104), and the flow returns to step S101.

When the event of the touch operation signal is not "SCALE" or "ROTATE" in step S102 (No in step S102), operation type determining unit 16 determines whether or not the touch operation signal is "DOWN' (step S105). When the touch operation signal is "DOWN" (Yes in step S105), operation type determining unit 16 deletes all touch operation signals in a cue of a memory which temporarily stores touch operation signals when a touch operation signal transmission path is not determined (step S106). Further, operation type determining unit 16 stores the touch operation signal received in step S101, in the cue of the memory (step S107). Subsequently, operation type determining unit 16 stores a current time in the memory to manage a timing at which the event "DOWN" is received (step S108), and the flow returns to step S101.

When the touch operation signal is not "DOWN" in step S105 (No in step S105), operation type determining unit 16 determines whether or not a predetermined period of time (several tens of milliseconds to several hundreds of milliseconds are assumed) has passed after the event "DOWN" is received, based on the time information recorded in step S108 and the current time (step S109). In case where the predetermined period of time passes (Yes in step S109), operation type determining unit 16 determines that the touch operation type is swipe (step S110). Swipe is the touch operation belonging to group B, and therefore operation type determining unit 16 adopts method 2. Further, operation type determining unit 16 directly transmits the touch operation signal existing in the cue of the memory and the latest touch operation signal to each browser (step S111), and the flow returns to step S101.

In case where the predetermined period of time has not passed in step S109 (No in step S109), operation type determining unit 16 determines whether or not the event of the touch operation signal is "UP" (step S112). When the touch operation signal is "UP" (Yes in step S112), operation type determining unit 16 determines the touch operation as tap or flip (step S113). Tap and flip are touch operations belonging to group A, and therefore operation type determining unit 16 adopts method 1. Further, operation type determining unit 16 transmits the touch operation signal existing in the cue of the memory and the latest touch operation signal to operation signal converter 17 (step S114). Operation type determining unit 16 transmits the touch operation signal to operation signal converter 17 in step S114 and then clears the time information stored in the memory in step S108 (step S115), and then the flow returns to step S101.

When the touch operation signal is not "UP" in step S112 (No in step S112), operation type determining unit 16 stores the touch operation signal in the cue of the memory (step S116), and the flow returns to step S101.

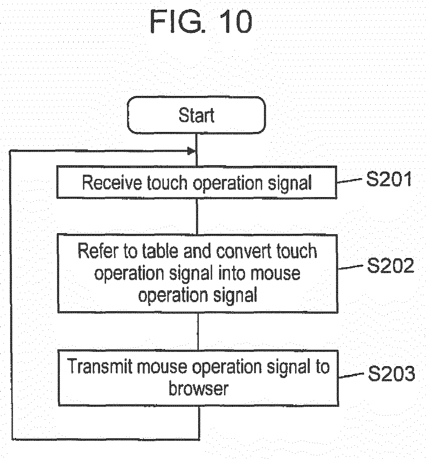

FIG. 10 is a flowchart illustrating an operation of operation signal converter 17. First, operation signal converter 17 receives a touch operation signal from operation type determining unit 16 (step S201). Next, operation signal converter 17 refers to a table in which the correspondence relationship between the touch operation signals and the mouse operation signals illustrated in FIG. 5 is described, and converts a touch operation signal into a mouse operation signal (step S202). Further, operation signal converter 17 transmits the corresponding mouse operation signal to each browser 11 (step S203). When step S203 is finished, the flow returns to step S201 to repeat processing in step S201 to step S203.

As described above, operation type determining unit 16 determines a touch operation type (tap, flick or swipe) based on the touch operation signal received from each client terminal 20, and determines whether to transmit the touch operation signal to operation signal converter 17, and convert the touch operation signal into a mouse operation to transmit to each browser 11, or directly transmit the touch operation signal to each browser 11 without converting the touch operation signal into a mouse operation. Further, each browser 11 generates content by using a touch operation signal or a mouse operation signal based on the determination result of operation type determining unit 16. Consequently, it is possible to operate operations of a plurality of client terminals by using one desktop of the server.

In addition, in the present exemplary embodiment, one desktop screen of screen generating server 10 is shared by the four client terminals. However, the desktop screen may be shared by two or more client terminals.

In addition, in the present exemplary embodiment, the desktop screen (a resolution is 3840 × 2160) of screen generating server 10 is one screen which can draw screens of a plurality of client terminals 20 (a resolution is 1920 × 1080). The desktop screen may be a book format including a plurality of sheets in which the screens of a plurality of client terminals 20 (the resolution is 1920 × 1080) can be drawn.

### (SECOND EXEMPLARY EMBODIMENT)

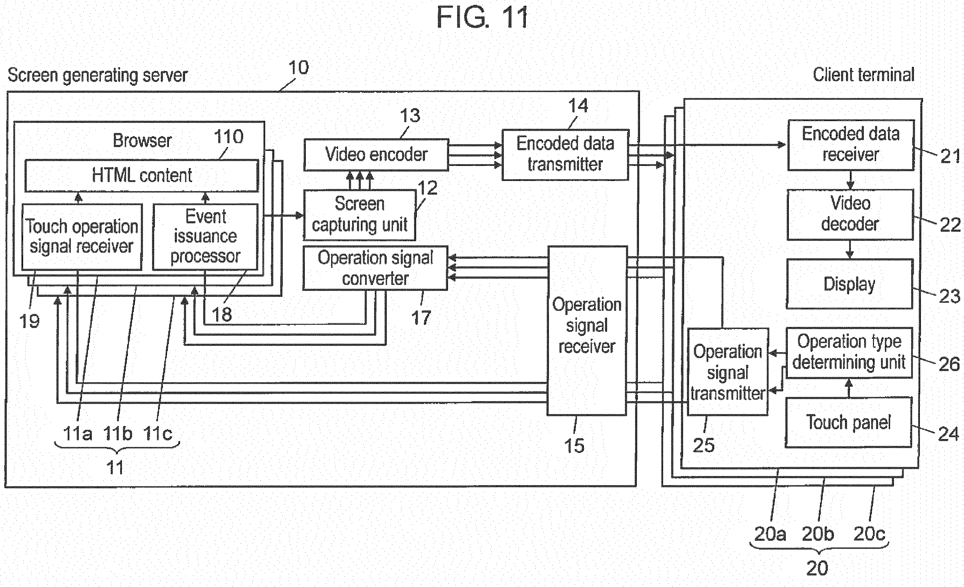

A case where operation type determining unit 16 is disposed in screen generating server 10 has been described in the first exemplary embodiment. However, the present exemplary embodiment is not limited to this. FIG. 11 is a block diagram illustrating configurations of a screen generating server and client terminals according to the second exemplary embodiment. As illustrated in FIG. 11, in the screen generating system, operation type determining unit 26 is installed in each client terminal 20.

In the second exemplary embodiment, operation type determining unit 26 is installed in each client terminal 20, and a touch operation signal is transmitted via operation signal transmitter 25 or operation signal receiver 15 by sorting group A and group B per port. Configurations other than these points are the same as the configurations in the first exemplary embodiment illustrated in FIG. 2, and therefore will not be described. By installing operation type determining unit 26 in each client terminal 20, there is an advantage that each client terminal 20 determines an operation type and a processing load is dispersed.

In addition, in the present exemplary embodiment, operation type determining unit 26 sorts a touch operation signal per port to transmit. However, operation type determining unit 26 may transmit a touch operation signal and a determination result of the touch operation signal to operation signal receiver 15, and operation signal receiver 15 may sort group A and group B of touch operation signals to operation signal converter 17 or touch operation signal receiver 19 to transmit based on the determination result of the touch operation signal. Consequently, it is possible to reduce a number of ports of operation signal transmitter 25.

### INDUSTRIAL APPLICABILITY

A screen generating device, a screen generating system and a screen generating method according to the present disclosure are applicable to screen generating severs or client terminals connected to the screen generating servers.

### REFERENCE MARK IN THE DRAWINGS

- 10:: screen generating server
- 11, 11a, 11b, 11c:: browser
- 12:: screen capturing unit
- 13:: video encoder
- 14:: encoded data transmitter
- 15:: operation signal receiver
- 16:: operation type determining unit
- 17:: operation signal converter
- 18:: event issuance processor
- 19, 19a, 19b, 19c:: touch operation signal receiver
- 20, 20a, 20b, 20c:: client terminal
- 21:: encoded data receiver
- 22:: video decoder
- 23:: display
- 24:: touch panel
- 25:: operation signal transmitter
- 26:: operation type determining unit
- 110:: HTML content
- 200:: large display
- 300:: smartphone
- 400:: tablet

## Claims

1. A screen generating device which receives a first operation signal of a touch operation from each of a plurality of terminals, and transmits content matching each of the plurality of terminals, the screen generating device comprising:
an operation signal receiver which receives the first operation signal;
an operation type determining unit which determines a type of the first operation signal;
an operation signal converter which converts the first operation signal into a second operation signal of a mouse operation; and
a plurality of browsers which generates a screen of the content matching each of the plurality of terminals by using the first operation signal or the second operation signal based on a result of the determination made by the operation type determining unit.

2. The screen generating device according to claim 1, wherein the operation type determining unit determines the first operation signal based on an operation time and a number of operation target elements.

3. The screen generating device according to claim 1, wherein, when the touch operation is one of swipe, pinch and rotate, the browsers generate the content by using the first operation signal.

4. The screen generating device according to claim 1, wherein, when the touch operation is one of tap and flick, the browsers generate the content by using the second operation signal.

5. A screen generating system comprising:
a plurality of terminals; and
a screen generating device which receives a first operation signal of a touch operation from each of the plurality of terminals, and transmits content matching each of the plurality of terminals, wherein
the plurality of terminals includes
an operation signal transmitter which transmits a touch operation input from a touch panel, as the first operation signal to the screen generating device, and
the screen generating device includes:
an operation signal receiver which receives the first operation signal;
an operation type determining unit which determines a type of the first operation signal;
an operation signal converter which converts the first operation signal into a second operation signal of a mouse operation; and
a plurality of browsers which generates a screen of the content matching each of the plurality of terminals by using the first operation signal or the second operation signal based on a result of the determination made by the operation type determining unit.

6. A screen generating system comprising:
a plurality of terminals; and
a screen generating device which receives a first operation signal of a touch operation from each of the plurality of terminals, and transmits content matching each of the plurality of terminals, wherein
the plurality of terminals includes:
an operation type determining unit which determines a type of the first operation signal input from a touch panel; and
an operation signal transmitter which transmits to the screen generating device the first operation signal and a result of the determination made by the operation type determining unit, and
the screen generating device includes:
an operation signal receiver which receives the first operation signal;
an operation signal converter which converts the first operation signal into a second operation signal of a mouse operation; and
a plurality of browsers which generates a screen of the content matching each of the plurality of terminals by using the first operation signal or the second operation signal based on a result of the determination made by the operation type determining unit.

7. A screen generating method for receiving a first operation signal of a touch operation from each of a plurality of terminals, and transmitting content matching each of the plurality of terminals, the screen generating method comprising:
receiving the first operation signal;
determining a type of the first operation signal; and
generating a screen of the content matching each of the plurality of terminals by using the first operation signal or a second operation signal of a mouse operation converted from the first operation signal, based on a result of the determination.
